# EUROPÄISCHE PATENTSCHRIFT

(11) **EP 0 939 000 B1**
(45) Veröffentlichungstag und Bekanntmachung des Hinweises auf die Patenterteilung: **10.04.2002**
(21) Anmeldenummer: 99100872.3
(22) Anmeldetag: 19.01.1999
(51) Int. Cl.: B60N 3/08

(54) **Ascher für Fahrzeuge**
Ash tray for vehicles
Cendrier pour véhicules

(30) Priorität: 27.02.1998 DE 19808234
(43) Veröffentlichungstag der Anmeldung: 01.09.1999
(73) Patentinhaber: Johnson Controls Interiors GmbH & Co. KG, 42285 Wuppertal (DE)
(72) Erfinder: Kaiser, Klaus-Peter, 42929 Wermelskirchen (DE); Nowak, Manfred, 42659 Solingen (DE)
(74) Vertreter: Patentanwälte Dr. Solf & Zapf

(56) Entgegenhaltungen:
- EP-A- 0 121 119
- EP-A- 0 353 682
- DE-A- 2 412 451
- DE-A- 2 823 993
- DE-A- 3 210 835
- DE-C- 4 434 199

## Beschreibung

Die Erfindung bezieht sich auf einen Ascher für Fahrzeuge mit einem an einer Anschlußwand, insbesondere an einer Türverkleidung befestigbaren Gehäuse, einem über Führungsmittel bereichsweise aus dem Gehäuse herausbewegbaren Schubfach und einem von diesem aufgenommenen, nach oben offenen Aschertopf.

In heutigen Fahrzeugen kommen im wesentlichen zwei Arten von Aschern zum Einsatz, und zwar Schubladenascher (vgl. z. B. DE 28 23 993 A1) und Kippascher (vgl. z. B. DE 24 12 451 A1). Schubladenascher wurden bisher im Bereich der Armaturentafeln, Konsolen und den freien Stirnenden der Armlehnen von Fahrzeugen eingebaut. Kippascher kann man an den gleichen Einbauorten vorfinden, insbesondere aber im Bereich der Fahrzeugseitenwände und an den hinteren Fahrzeugtüren. Bei den herkömmlichen Schubaschern sind die Schubladen links und rechts in Gehäuseführungen verschiebbar gelagert, während bei den herkömmlichen Kippaschern eine untere Gehäuseachse vorgesehen ist, um die die Kipplade zu schwenken vermag. Daneben sind auch Ascher bekannt, die ein nach oben offenes Gehäuse mit einem darin herausnehmbar eingesetzten Aschertopf sowie einen am Gehäuse angelenkten Verschlußdeckel (vgl. z. B. DE 32 10 835 A1 dem Oberbegriff des unabhängigen Anspruchs 1 entsprechend) aufweisen.

Der Erfindung liegt nun die Aufgabe zugrunde einen Ascher der eingangs genannten Art zur Verfügung zu stellen, der die Vorteile eines Schubladenaschers aufweist und dennoch mit einer nur geringen Einbautiefe auskommt.

Zur Lösung dieser Aufgabe sind erfindungsgemäß die im Anspruch 1 angegebenen Maßnahmen vorgesehen. Dadurch, daß das Gehäuse eine in der Einbaulage etwa vertikal und parallel zur Anschlußwand ausgerichtete Rückwand aufweist und das Schubfach parallel zur Rückwand des Gehäuses in etwa horizontaler Ausrichtung verschiebbar ist, kann eine nur geringe Einbautiefe realisiert werden, und zwar völlig unabhänig vom jeweils geforderten Hubweg für das Schubfach. Mit der Erfindung wird damit ein an einer Fahrzeugseitenwand, insbesondere einer Türverkleidung anbringbarer Ascher verwirklicht, der ein in Fahrzeuglängsrichtung verschiebbares Schubfach aufweist. Ein solcher Ascher kommt den insoweit gestellten Forderungen der Abnehmerschaft entgegen.

Dadurch, daß das Schubfach gemäß Anspruch 2 über eine Teleskop-Führungsvorrichtung bewegbar ist, die einerseits an der Rückwand des Gehäuses und andererseits an der dieser benachbarten Seitenwand des Schubfachs befestigt ist, ergibt sich eine nur einseitige Halterung und Führung für das Schubfach mit weiterer Minimierung der Einbautiefe und mit dem Vorteil einer leichtgängigen, geräuscharmen Führung.

Die Maßnahme nach Anspruch 3 bietet den besonderen Vorteil einer reibungsarmen Rollführung, die besonders geräuscharm und leichtgängig ist und letztendlich eine enorme Komfort- und Produktverbesserung bewirkt. Mit Rücksicht darauf, daß die Anschlußwand für den Ascher häufig eine nur geringe Verformungsstabilität aufweist, insbesondere dann, wenn eine Tür- oder ggf. auch eine Seitenwandverkleidung als Anschlußwand dienen soll, wird eine stabile Führungs- und Haltevorrichtung für das Schubfach benötigt. Um dieser Aufgabe optimal zu genügen, ist in Ausgestaltung der Erfindung eine Teleskop-Führungsvorrichtung mit den Merkmalen nach Anspruch 4 vorgesehen. Hierdurch wird einem Verzug des Aschergehäuses bei der Montage, der zu erheblichen Funktionsstörungen führen könnte, in optimaler Weise entgegengewirkt.

Damit bei ausgefahrener Lage des Schubfachs eine Verkantung, etwa durch unsachgemäßen Gebrauch auszuschließen ist, empfiehlt es sich, den Ascher, wie in Anspruch 5 angegeben, auszugestalten.

Die derzeitig zum Einsatz gelangenden Ascher für Fahrzeuge bieten einen hohen Bedienungskomfort, indem durch bloßes Antippen des Ascherfachs eine Verriegelungseinrichtung gelöst und das Ascherfach durch die Kraft darauf einwirkender Federmittel in die Gebrauchslage überführt wird. Damit auch der erfindungsgemäße Ascher einen besonders hohen Bedienungskomfort aufweist, sind die in Anspruch 6 angegebenen Maßnahmen vorgesehen.

Der erfindungsgemäße Ascher soll sich auch durch ein gutes Aussehen auszeichnen und ist daher entsprechend der Maßnahme nach Anspruch 7 auszugestalten.

Die Maßnahmen nach Anspruch 8 dienen einerseits dazu, die Funktionalität des Aschers zu erweitern und sind andererseits vorgesehen, um den ästhetischen Ansprüchen der Abnehmerschaft zu genügen.

Anspruch 9 kennzeichnet eine besonders bevorzugte Maßnahme mit dem besonderen Vorteil, daß der Ascher nicht ins Fahrzeuginnere hineinragt, und zwar unabhängig davon, ob sich die Ascherlade in der Gebrauchslage oder in der Nichtgebrauchslage befindet.

Um einer allgemeinen Forderung hinsichtlich einer kostengünstigen Herstellung gerecht zu werden, kann vorgesehen sein, daß das Gehäuse, das Schubfach und der Aschertopf als Kunststoff-Spritzgußteile ausgebildet sind.

Die Maßnahme nach Anspruch 10 erbringt den Vorteil, daß die benötigte Einbautiefe für den Ascher noch weiter verringert wird und nicht zuletzt auch den besonderen Vorteil einer Gehäusestabilisierung, und zwar gerade in dem Bereich, in dem die Halte- und Führungseinrichtung für die Ascherlade am Gehäuse angeordnet ist.

Der erfindungsgemäße Ascher benötigt eine nur geringe Einbautiefe. Weitere besondere Vorteile des Aschers sind darin zu sehen, daß die Ascherlade in enger Anlage zur Anschlußwand in Fahrzeuglängsrichtung verschiebbar ist, eine lediglich einseitig am Gehäuse und an der Ascherlade anzuordnende Halte- und Führungseinrichtung aufweist und daß die Ascherlade neben einem hohen Bedienungskomfort eine besonders geräuscharme, verkantungsunempfindliche und leichtgängige Führung mit geringer Toleranzabhängigkeit besitzt.

Ein Ausführungsbeispiel der Erfindung wird im folgenden anhand der Zeichnungen näher erläutert, und es zeigen:
- Fig. 1: den Ascher in Vorderansicht,
- Fig. 2: einen Schnitt II - II nach Fig. 1 und
- Fig. 3: einen Schnitt III - III nach Fig. 1.

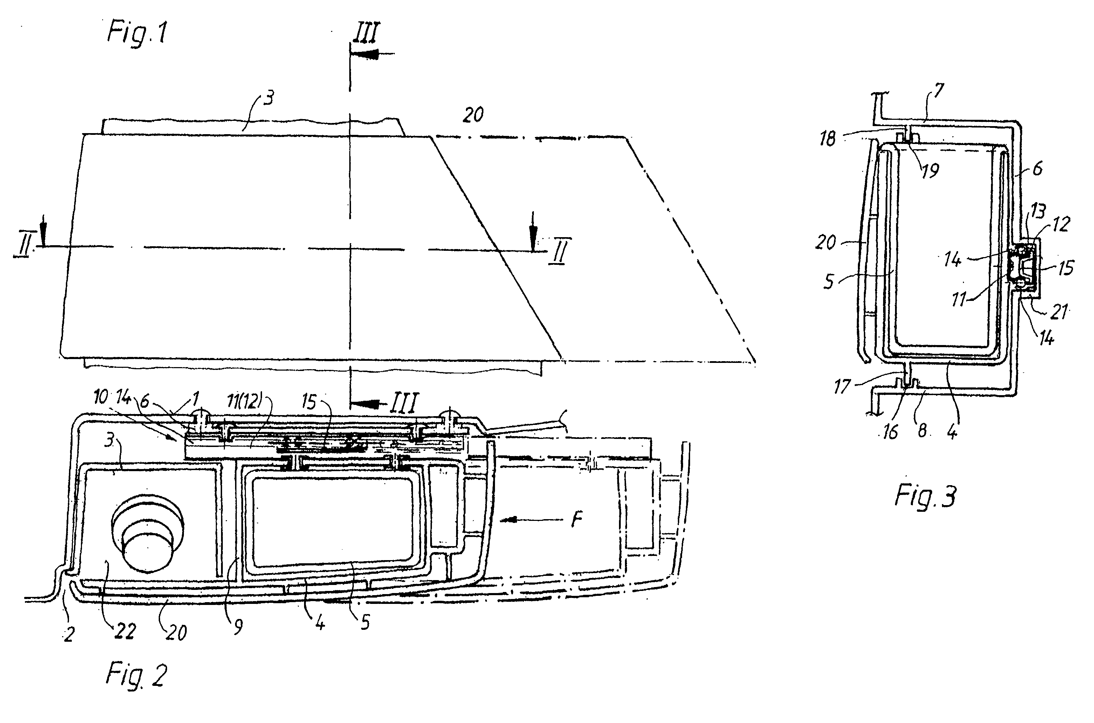

In Fig. 1 und 2 ist der Ascher mit ausgezogenen Linien in seiner Nichtgebrauchslage und mit strichpunktierten Linien in seiner Gebrauchslage gezeigt. Der Ascher ist an einer Anschlußwand 1, z. B. mittels Nieten, Schrauben oder durch eine Schweißverbindung befestigt und bei der Anschlußwand 1 handelt es sich bevorzugt um eine Türverkleidung. Wie in Fig. 2 dargestellt, befindet sich der Ascher in einer in der Anschlußwand 1 bzw. Türverkleidung ausgebildeten Nische 2.

Der Ascher besteht aus einem Gehäuse 3, einem vom Gehäuse 3 aufgenommenen Schubfach 4 und einem von diesem aufgenommenen, nach oben offenen Aschertopf 5. Das Gehäuse 3 weist eine in der Einbaulage etwa vertikal und parallel zur Anschlußwand 1 ausgerichtete Rückwand 6, eine sich daran senkrecht anschließende Kopfwand 7, eine Bodenwand 8 und ggf. eine nicht gezeigte Vorderwand auf. Das Schubfach 4 ist ein im wesentlichen rechteckiger, zumindest nach oben offener Kasten mit einem durch eine Zwischenwand 9 abgetrennten Aufnahmeraum für den Aschertopf 5.

Als Halte- und Führungseinrichtung für das Schubfach 4 im Gehäuse 3 dient eine zwischen der Rückwand 6 des Gehäuses 3 und der dieser benachbarten Seitenwand des Schubfachs 4 angeordnete Teleskop-Kugelführungsvorrichtung 10. Diese besteht aus zwei im Querschnitt gesehen U-förmigen Gleitschienen 11, 12, von denen die schmalere Gleitschiene 11, die am Schubteil 4 befestigt ist, mit ihrer offenen Seite in die offene Seite der breiteren Gleitschiene 12, die an der Rückwand 6 des Gehäuses 3 befestigt ist, eingesetzt ist. Die Schenkel der Gleitschienen 11, 12 sind mit längsdurchlaufenden Kugeln 13 aufnehmenden Hohlkehlen 14 und endseitigen Anschlägen (nicht gezeigt) ausgebildet. Die Kugeln 13 sitzen in den Schenkeln eines als U-Schiene ausgebildeten Kugelkäfigs 15, der sich zwischen den Schenkeln der breiteren Gleitschiene 12 befindet, die Schenkel der schmaleren Gleitschiene 11 übergreift und eine wesentlich geringere Länge (vgl. Fig. 2) als die Gleitschienen 11, 12 aufweist.

Gehäuseseitig ist die Teleskop-Kugelführungsvorrichtung 10 in einer in der Rückwand 6 des Gehäuses 3 ausgebildeten Nut, die sich in einem Gehäuserücksprung 21 befindet, angeordnet.

Im Gehäuse 3 ist eine Aufnahmekammer 22 für einen Zigarettenanzünder vorgesehen und das Schubfach weist einen Freiraum auf, wobei die Anordnung so getroffen ist, daß der Zigarettenanzünder den Blicken eines Betrachters entzogen ist, wenn sich das Schubfach in der Nichtgebrauchsstellung befindet.

Zusätzlich sind zwischen dem Gehäuse 3 und dem Schubfach 4 Gleitführungselemente in Form von in Nuten eingreifenden Stegen vorgesehen. Wie Fig. 3 zeigt, kann in eine aus zwei Stegen gebildete Nut 16 an der Bodenwand 8 des Gehäuses 3 ein am Schubfach 4 angeordneter Steg 17 eingreifen, wie auch ein Steg 18 an der Kopfwand 7 des Gehäuses 3 in eine Nut 19 am Schubfach 4 eingreifen kann.

Das Schubfach 4 trägt eine daran über nicht gezeigte Klipselemente befestigte Blende 20, die dem Ascher ein besonders gefälliges Aussehen verleiht. Die Blende 20 ist etwa L-förmig gestaltet und deckt somit auch das vordere Ende des Schubfachs 4 ab.

Durch Andrücken des Schubfachs 4 in Pfeilrichtung F wird eine Verriegelungseinrichtung gelöst und das Schubfach 4 wird durch die Kraft von Federmitteln aus dem Gehäuse 3 herausbewegt. Die Einzelheiten dieser Ausgestaltungen sind nicht gezeigt, weil beim erfindungsgemäßen Ascher insoweit von bekannten Lehren, vgl. z. B. DE 44 34 199 C1 Gebrauch gemacht wird.

## Patentansprüche

1. Ascher für Fahrzeuge mit einem an einer Anschlußwand (1), insbesondere an einer Türverkleidung befestigbaren Gehäuse (3), einem über Führungsmittel bereichsweise aus dem Gehäuse (3) herausbewegbaren Schubfach (4) und einem von diesem aufgenommenen, nach oben offenen Aschertopf (5), wobei das Gehäuse (3) eine in der Einbaulage etwa vertikal und parallel zur Anschlußwand (1) ausgerichtete Rückwand (6) aufweist, **dadurch gekennzeichnet, daß** das Schubfach (4) parallel zur Rückwand (6) des Gehäuses (3) in etwa horizontaler Ausrichtung über eine Teleskop-Führungsvorrichtung verschiebbar ist.

2. Ascher nach Anspruch 1, **dadurch gekennzeichnet, daß** die Teleskop-Führungsvorrichtung einerseits an der Rückwand (6) des Gehäuses (3) und andererseits an der dieser benachbarten Seitenwand des Schubfachs (4) befestigt ist.

3. Ascher nach Anspruch 1 oder 2, **dadurch gekennzeichnet, daß** die Teleskop-Führungsvorrichtung als Teleskop-Kugelführungsvorrichtung (10). ausgebildet ist.

4. Ascher nach zumindest einem der Ansprüche 1 bis 3, **dadurch gekennzeichnet, daß** die Teleskop-Kugelführungsvorrichtung (10) aus zwei im Querschnitt gesehen U-förmigen Gleitschienen (11, 12) unterschiedlicher Breite besteht, von denen die schmalere Gleitschiene (11) mit ihrer offenen Seite in die offene Seite der breiteren Gleitschiene (12) eingesetzt ist, daß die Schenkel der Gleitschienen (11, 12) mit längsdurchlaufenden, Kugeln (13) aufnehmenden Hohlkehlen (14) und endseitigen Anschlägen ausgebildet sind und daß die Kugeln (13) in den Schenkeln eines als U-Schiene ausgebildeten Kugelkäfigs (15) sitzen, der sich zwischen den Schenkeln der breiteren Gleitschiene (12) befindet, die Schenkel der schmaleren Gleitschiene (11) übergreift und eine wesentlich geringere Länge als die Gleitschienen (11, 12) aufweist.

5. Ascher nach einem oder mehreren der Ansprüche 1 bis 4, **dadurch gekennzeichnet, daß** sich etwa rechtwinklig an die Rückwand (6) des Gehäuses (3) eine Kopfwand (7) und eine Bodenwand (8) anschließt und daß an der Kopfwand (7) und/oder Bodenwand (8) sich in Gehäuselängsrichtung erstreckende Gleitführungselemente angeordnet sind, die mit Gleitführungselementen am Schubfach zusammenwirken, wobei die Gleitführungselemente aus in Nuten (16, 19) eingreifenden Stegen (17, 18) bestehen.

6. Ascher nach wenigstens einem der vorangegangenen Ansprüche, **dadurch gekennzeichnet, daß** an der Rückwand (6) des Gehäuses (7) ein ein Ritzel antreibender Federmotor angeordnet ist und daß die der Rückwand (6) des Gehäuses (3) benachbarte Seitenwand des Schubfachs (4) eine mit dem Ritzel kämmende Zahnstange aufweist, um das Schubfach (4) nach dem Lösen einer Verriegelungseinrichtung aus dem Gehäuse (3) heraus in die Gebrauchslage, in welcher der Aschertopf (5) zugänglich ist, zu bewegen.

7. Ascher nach wenigstens einem der Ansprüche 1 bis 6, **dadurch gekennzeichnet, daß** an der dem Betrachter zugewandten Seitenwand des Schubfachs (4) eine über Klipselemente gehaltene Blende (20) angeordnet ist.

8. Ascher nach wenigstens einem der Ansprüche I bis 7, **dadurch gekennzeichnet, daß** das Gehäuse (3) eine Aufnahmekammer (22) und das Schubfach (4) einen Freiraum für einen Zigarettenanzünder aufweist, wobei die Anordnung so getroffen ist, daß der Zigarettenanzünder den Blicken eines Betrachters entzogen ist, wenn sich das Schubfach (4) in der Nichtgebrauchsstellung befindet.

9. Ascher nach wenigstens einem der Ansprüche 1 bis 8, **dadurch gekennzeichnet, daß** derselbe in einer in der Anschlußwand (1) ausgebildeten, eine Bewegung der Schublade (4) in die Gebrauchslage nicht behindernden Nische (2) angeordnet ist, deren Tiefe so bemessen ist, daß die Blende (20) mit der Hauptfläche der Anschlußwand (1) in etwa einer Ebene liegt.

10. Ascher nach wenigstens einem der Ansprüche 1 bis 9, **dadurch gekennzeichnet, daß** die Teleskop-Führungsvorrichtung (10) gehäuseseitig in einer in der Rückwand (6) des Gehäuses (3) ausgebildeten Längsnut angeordnet ist.

## Claims

1. Ashtray for vehicles, with a housing (3) which can be secured on a connection wall (1), in particular on a door lining, with a drawer (4) which can be moved out in an area from the housing (3) via guide means, and with an ashtray pot (5) which can be received by this drawer and which is open towards the top, the housing (3) having a rear wall (6) which, in the position of installation, is oriented approximately vertically and parallel to the connection wall (1), **characterized in that** the drawer (4) is displaceable parallel to the rear wall (6) of the housing (3) in approximately horizontal orientation via a telescopic guide device.

2. Ashtray according to Claim 1, **characterized in that** the telescopic guide device is secured on the one hand on the rear wall (6) of the housing (3) and on the other hand on the adjacent side wall of the drawer (4).

3. Ashtray according to Claim 1 or 2, **characterized in that** the telescopic guide device is designed as a telescopic ball guide device (10).

4. Ashtray according to at least one of Claims 1 to 3, **characterized in that** the telescopic ball guide device (10) consists of two slide rails (11, 12) which are U-shaped when viewed in cross section and are of different width, and of which the narrower slide rail (11) is inserted with its open side into the open side of the wider slide rail (12), **in that** the branches of the slide rails (11, 12) are designed with longitudinally extending channels (14), receiving balls (13), and with limit stops arranged at the ends, and **in that** the balls (13) sit in the branches of a ball cage (15) which is designed as a U-shaped rail and which is located between the branches of the wider slide rail (12), engages over the branches of the narrower slide rail (11) and has a substantially shorter length than the slide rails (11, 12).

5. Ashtray according to one or more of Claims 1 to 4, **characterized in that** a top wall (7) and a bottom wall (8) adjoin approximately at right angles to the rear wall (6) of the housing (3), and **in that** slide guide elements extending in the longitudinal direction of the housing are arranged on the top wall (7) and/or bottom wall (8) and cooperate with slide guide elements on the drawer, said slide guide elements consisting of webs (17, 18) engaging in grooves (16, 19).

6. Ashtray according to at least one of the preceding claims, **characterized in that** a spring motor driving a pinion is arranged on the rear wall (6) of the housing (7), and **in that** the side wall of the drawer (4) adjacent to the rear wall (6) of the housing (3) has a toothed rack meshing with the pinion in order to move the drawer (4) out of the housing (3), after a locking mechanism has been released, into the position of use in which the ashtray pot (5) is accessible.

7. Ashtray according to at least one of Claims 1 to 6, **characterized in that** a cover panel (20) held via clip elements is arranged on that side wall of the drawer (4) facing the viewer.

8. Ashtray according to at least one of Claims 1 to 7, **characterized in that** the housing (3) has a receiving chamber (22) and the drawer (4) has a free space for a cigarette lighter, the arrangement being configured in such a way that the cigarette lighter is concealed from the view of an observer when the drawer (4) is located in the position in which it is not in use.

9. Ashtray according to at least one of Claims 1 to 8, **characterized in that** said ashtray is arranged in a niche (2) which is formed in the connection wall (1) and does not impede a movement of the drawer (4) into the position of use, and whose depth is dimensioned in such a way that the cover panel (20) lies in approximately the same plane as the main surface of the connection wall (1).

10. Ashtray according to at least one of Claims 1 to 9, **characterized in that** the telescopic guide device (10) is arranged on the housing side in a longitudinal groove formed in the rear wall (6) of the housing (3).

## Revendications

1. Cendrier pour véhicules avec un boîtier (3) pouvant être fixé sur une paroi de raccordement (1), en particulier sur un habillage de porte, un tiroir (4) pouvant être déplacé hors du boîtier (3) par zone par l'intermédiaire de moyens de guidage et un réservoir de cendrier (5) ouvert vers le haut, logé dans ledit tiroir, le boîtier (3) présentant une paroi arrière (6) orientée, dans la position de montage, à peu près verticalement et parallèlement à la paroi de raccordement (1), **caractérisé en ce que** le tiroir (4) peut être tiré parallèlement à la paroi arrière (6) du boîtier (3), dans une orientation à peu près horizontale, par l'intermédiaire d'un dispositif de guidage télescopique.

2. Cendrier selon la revendication 1, **caractérisé en ce que** le dispositif de guidage télescopique est fixé, d'une part, à la paroi arrière (6) du boîtier (3) et, d'autre part, à la paroi latérale, voisine de celle-ci, du tiroir (4).

3. Cendrier selon la revendication 1 ou la revendication 2, **caractérisé en ce que** le dispositif de guidage télescopique est conçu comme un dispositif de guidage télescopique à billes (10).

4. Cendrier selon au moins l'une quelconque des revendications 1 à 3, **caractérisé en ce que** le dispositif de guidage télescopique à billes (10) comprend deux glissières (11, 12) de largeur différente, en forme de U quand on les regarde en coupe, dont la glissière la plus étroite (11) est insérée avec son côté ouvert dans le côté ouvert de la glissière la plus large (12), **en ce que** les ailes des glissières (11, 12) sont conçues avec des gorges (14) longitudinales, dans lesquelles sont placées des billes (13), et avec des butées d'extrémité, et **en ce que** les billes (13) sont logées dans les ailes d'une cage à billes (15) en forme de rail en U qui se trouve entre les ailes de la glissière la plus large (12), recouvre les ailes de la glissière la plus étroite (11) et présente une longueur beaucoup plus réduite que les glissières (11, 12).

5. Cendrier selon l'une ou plusieurs des revendications 1 à 4, **caractérisé en ce qu'**une paroi de bout (7) et une paroi de fond (8) se raccordent à peu près perpendiculairement à la paroi arrière (6) du boîtier (3) et **en ce que** des éléments de guidage s'étendant dans le sens longitudinal du boîtier, disposés sur la paroi de bout (7) et/ou la paroi de fond (8), coopèrent avec des éléments de guidage placés sur le tiroir, lesdits éléments de guidage étant constitués par des nervures (17, 18) s'insérant dans des encoches (16, 19).

6. Cendrier selon au moins l'une quelconque des revendications précédentes, **caractérisé en ce qu'**un moteur à ressorts entraînant un pignon est disposé sur la paroi arrière (6) du boîtier (3) et **en ce que** la paroi latérale du tiroir (4), voisine de la paroi arrière (6) du boîtier (3), présente une crémaillère s'engrenant avec le pignon pour sortir le tiroir (4) du boîtier (3), après ouverture d'un dispositif de verrouillage, et pour l'amener dans la position d'utilisation, dans laquelle le réservoir du cendrier (5) est accessible.

7. Cendrier selon au moins l'une quelconque des revendications 1 à 6, **caractérisé en ce qu'**un cache (20) maintenu par des clips est disposé sur la paroi latérale du tiroir (4) tournée vers l'observateur.

8. Cendrier selon au moins l'une quelconque des revendications 1 à 7, **caractérisé en ce que** le boîtier (3) présente un compartiment (22) et le tiroir (4) un espace libre pour un allume-cigare, la disposition étant prévue pour que l'allume-cigare soit caché des regards d'un observateur lorsque le tiroir (4) se trouve dans la position de non-utilisation.

9. Cendrier selon au moins l'une quelconque des revendications 1 à 8, **caractérisé en ce qu'**il est disposé dans une niche (2) formée dans la paroi de raccordement (1), ne gênant pas un déplacement du tiroir (4) vers la position d'utilisation, dont la profondeur est dimensionnée pour que le cache (20) soit à peu près dans un plan avec la surface principale de la paroi de raccordement (1).

10. Cendrier selon au moins l'une quelconque des revendications 1 à 9, **caractérisé en ce que** le dispositif de guidage télescopique (10) est disposé côté boîtier dans une rainure longitudinale formée dans la paroi arrière (6) du boîtier (3).
